# EUROPÄISCHE PATENTSCHRIFT

(11) **EP 3 898 178 B1**
(45) Veröffentlichungstag und Bekanntmachung des Hinweises auf die Patenterteilung: **03.08.2022**
(21) Anmeldenummer: 19700338.7
(22) Anmeldetag: 05.01.2019
(51) Int. Cl.: B29C 55/08

(54) **BASISSTRUKTUR, VORRICHTUNG UND VERFAHREN ZUM TRANSPORT VON FOLIE**
BASIC STRUCTURE, DEVICE AND METHOD FOR TRANSPORTING FILMS
STRUCTURE DE BASE, DISPOSITIF ET PROCÉDÉ POUR TRANSPORTER UNE FEUILLE

(30) Priorität: 18.12.2018 DE 102018132763
(43) Veröffentlichungstag der Anmeldung: 27.10.2021
(73) Patentinhaber: GloBra GmbH, 5020 Salzburg (AT)
(72) Erfinder: PINEGGER, Wolfgang, 8971 Schladming-Rohrmoos (AT)
(74) Vertreter: 2s-ip Schramm Schneider Bertagnoll Patent- und Rechtsanwälte Part mbB
(86) Internationale Anmeldenummer: PCT/EP2019/050188
(87) Internationale Veröffentlichungsnummer: WO 2020/126105

(56) Entgegenhaltungen:
- WO-A1-2010/046738
- WO-A1-2017/215731
- DE-A1- 3 621 205

## Beschreibung

Die vorliegende Erfindung betrifft eine Basisstruktur, eine Vorrichtung und ein Verfahren zum Transport von Folie. Derartige Basisstrukturen, Vorrichtungen und Verfahren werden eingesetzt bei der Herstellung von Folien, insbesondere Endlosfolien, aus Kunststoff, die verstreckt werden.

Die Herstellung solcher Endlosfolien erfolgt üblicherweise, indem aufgeschmolzenes Kunststoffgranulat (die sogenannte Schmelze) auf einen sich bewegenden Kühlkörper aufgebracht wird, wo es unter Kühlung einen Folienfilm bildet und von dem sich bewegenden Kühlkörper mitgenommen wird. Die abgekühlte Folie wird dann von dem Kühlkörper separiert. Diese abgekühlte Folie wird auch als der "Cast Film" bezeichnet. Hierauf folgen die Phasen des Wiederaufheizens der so entstandenen Folie und des Verstreckens der Folie, und zwar z.B. in Folien-Transportrichtung (Machine Direction, MD), quer zur Transportrichtung (Transverse Direction, TD), und schließlich Thermofixierung (Heat Setting), Abkühlen, Randbeschneiden, weitere Behandlungen und Aufwickeln der Folie z.B. auf eine Rolle.

Im Folgenden wird unter dem Begriff der Folie oder des Folienfilms der "Cast Film" verstanden, also die (Endlos-)Folie, wie sie sich nach Herunterkühlung und Separierung von dem Kühlkörper präsentiert. Diese Endlosfolie kann - muss aber nicht - bereits verstreckt worden sein.

Bei den Folien kann es sich um alle Typen handeln, die durch Aufbringen eines Materials aus einer Schmelze per Extrusion z.B. mittels Flachdüse in einer oder mehreren Lagen auf die Oberfläche einer rotierenden Kühlwalze und die dadurch bedingte anschließende Abkühlung hergestellt werden können. Das betrifft auch Folien, welche gleichzeitig auf der kühlwalzenabgewandten Seite mittels Luft, Wasser oder durch weitere Walzen oder in anderer Weise abgekühlt werden können. Das betrifft jedenfalls aber nicht ausschließlich alle polyolefinen Kunststoffe wie Polypropylen (PP) und Polyethylen (PE), Polyester (z.B. PET), Polyamid, Polyactide (PLA), Polystyrene, Polykarbonate, und alle, die unter die Definition von oben fallen.

Im Folgenden werden die Begriffe "recken", "strecken", "verstrecken" und davon abgeleitete Begriffe synonym zueinander verwendet.

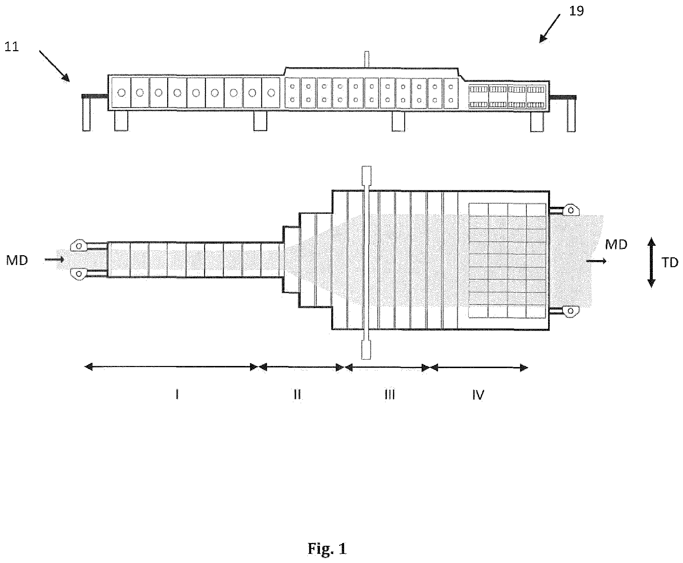

Fig. 1 zeigt eine typische Anlage (bzw. ein Anlagenteil) zur Aufheizung von zu verstreckender Polypropylen-Folie (Bereich I) für die anschließende TD-Streckung (Bereich II) sowie Annealing (Bereich III) und Abkühlung (Bereich IV), obere Abbildung in Seitenansicht, untere Abbildung in der Sicht von oben. Die Einteilung in die vier Bereiche gilt auch bei Einsatz der erfindungsgemäßen Folientransportvorrichtung. Im Folgenden werden die Bereiche I und II näher betrachtet.

Bei bekannten Folientransportvorrichtungen wird die Folie am Einlauf 11 der Anlage in einem Kettenschienensystem seitlich mit Kluppen eingekluppt und durch die Aufheizzone (Bereich I) transportiert. In der Streckzone (Bereich II) verändern die Kluppen einer jeden Seite ihre Richtung und laufen nach außen, wodurch die Folie quer zur Transportrichtung verstreckt wird. In der Annealing- und in der Kühlzone kann das System ebenfalls seine Richtung ändern oder auch nur zum Transport der Folie verwendet werden. Am Auslauf 19 der Anlage wird die Folie wieder ausgekluppt.

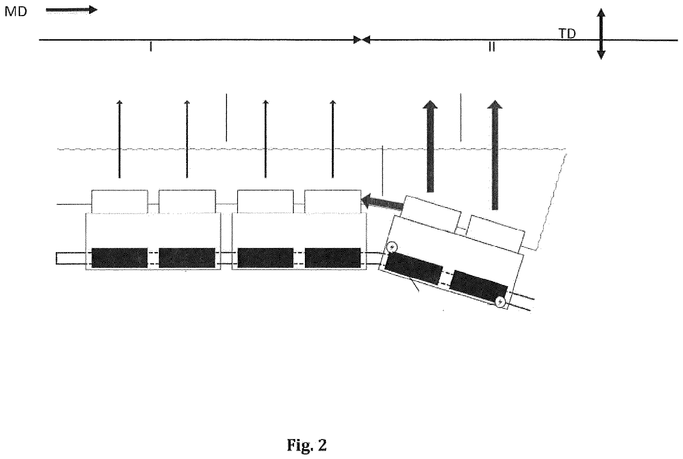

Diese Anlage hat eine integrierte Heizung mit heißer Luft. Den Übergang zwischen der Aufheizzone (Bereich I) und der Streckzone (Bereich II) zeigt Fig. 2 für die rechte Seite (in MD gesehen) des Kettenschienensystems.

Man unterscheidet zwischen Kettenschienensystem mit Kluppen, welche gleiten (Gleitkette), und solchen, die mit Rollenlagern bewegt werden (Rollenkette). Gleitketten arbeiten mit Gleitelementen, welche die Kluppen auf der Schiene führen. Die Gleitelemente sind aus Kunststoff und müssen geschmiert werden, was teuer ist und Verunreinigungen schafft. Diese Systeme sind bei bestimmten Folien wie PET-Folien nicht anwendbar.

Rollenketten arbeiten mit 7-9 Rollenlagern, also Rollen mit Kugellagern pro Kluppe. Sie arbeiten im Wesentlichen mit viel weniger Schmierstoffen, sind teurer, und es kommt durch die hohe Zahl von Lagern (viele tausend) leicht zu mechanischen Problemen; wenn nur eines dieser Lager bricht, kann das gesamte System zerstört oder zumindest lahmgelegt werden.

Im der Aufheizzone (Bereich I), der Annealingzone (Bereich III) und der Abkühlzone (Bereich IV) gibt es keine oder nur sehr geringe Lateralkräfte. Die sehr leichte und nach der Verstreckung auch sehr dünne Folie wird lediglich beidseitig gehalten.

In der Reckzone (Bereich II) kommen Lateralkräfte hinzu aus der Querverstreckung der Folie. Die Folie ist dort aber sehr aufgeheizt und wird im Verlauf der Reckzone dünner. Die notwendigen Lateralkräfte für das Verstrecken der Folie und die Kräfte und die Energie der massiven Kettenschienensysteme stehen in keinem vernünftigen Verhältnis zueinander.

Mangels anderweitiger Lösungen verwendet man im Stand der Technik mit diesen Kettenschienensystemen mit Kluppen eine massive Technologie für die Verarbeitung im Verhältnis dazu sehr geringer Kräfte.

So kommen im Durchschnitt auf 1 Meter Kettenlänge ca. 8 Kluppen auf jeder Seite und noch einmal so viele im Rücklauf. Die Folienbreite bei einer 8,7 Meter- Anlage am TDO-Einlauf beträgt ca. 1,2 Meter. Die Foliendicke beträgt hier ca. 140 µm für eine Filmdicke von 20 µm am Ende der Reckzone.

Die Folie, die hier auf einem Meter auf beiden Seiten eingekluppt wird, hat eine Fläche von 1,2 m² und wiegt nur wenige hundert Gramm. Das bleibt während der gesamten Verstreckphase gleich; sie wird breiter aber gleichzeitig dünner.

Dafür verwendet man Systeme, die viele Tonnen wiegen, selbst sehr hohen Reibungs- und Zugkräften mit entsprechender Wärmeentwicklung ausgesetzt sind, aber bis zu 80 % des Durchlaufes nur wenige hundert Gramm an Folie halten müssen und in der Streckzone im Verhältnis nur geringen Lateralkräften ausgesetzt sind.

Das System war in Ordnung, solange die Maschinen langsam und die Aufheizzone sowie die Annealing- und Kühlzonen im Vergleich zur Reckzone relativ kurz waren. Nun ist bei schneller laufenden Maschinen die Reckzone im Verhältnis zu den anderen Zonen kurz und das System in sich viel zu komplex und fehleranfällig, zu schwer, erzeugt enorme Zugkräfte, Reibung, Hitze etc. und zwar nur, um wenige Kilogramm Folie an beiden Seiten festzuhalten.

Gleitsysteme verwenden, wie oben dargelegt, tausende Gleitelemente, welche geschmiert werden müssen. Dafür kann man nur sehr teure Spezialöle verwenden speziell wegen der Hitze, und Öl in solchen Systemen ist immer schlecht, es darf nicht mit der Folie in Berührung kommen, da es diese verunreinigt oder zu Filmrissen führt.

Diese Schmiersysteme sind nicht nur teuer sondern auch extrem kompliziert und fehleranfällig.

Rollensysteme haben bis zu 30.000 Rollenlager in einer Maschine. Diese bergen eine große Gefahr für den Fall, dass auch nur eines davon stecken bleibt und bricht. Da sie aus sehr hartem Stahl bestehen, kann das zu einem Totalausfall des ganzen Systems führen. Daher werden die Lager in Rollenketten in Zyklen von ca. 2 Jahren präventiv ausgetauscht, was enorm teuer ist.

Die Zugkräfte auf den Ketten sind aufgrund ihres eigenen Gewichtes und Systems (nicht wegen der Folie) mittlerweile so groß, dass es zu einer Längung der Kette kommt und die geschmierten Kettenbolzen sehr rasch verschleißen. Das Schmieren der Kettenbolzen ist enorm aufwendig und wiederum fehleranfällig. Lebensdauergeschmierte Kettenbolzen haben sich nicht bewährt. Damit kommt es zu Kettenproblemen bis hin zu Kettenrissen. Die damit verbundene Reibungsenergie erzeugt Wärme und bedarf aufwendiger Kühlsysteme der Schienen.

Letztlich werden diese sehr teuren und komplizierten Kettenschienensysteme nur dazu verwendet, Folie einzukluppen und während eines Aufheiz-, Querstreck-, Annealing und Abkühlprozesses sehr schnell durch einen sehr langen Ofen zu führen.

Die geschilderten mechanischen Probleme führen auch zu verfahrenstechnischen Problemen. Die massiven Stahlkluppen befinden sich mit ihren Greifelementen in der sehr heißen Zone des Ofens und heizen sich entsprechend auf. Je höher die Produktionsgeschwindigkeit der Maschine, desto länger wird die Aufheizzone. Damit sind die Kluppen über längere Strecken in heißen Bereichen und je schneller die Maschine desto schneller kommen sie vom Auslauf zum Einlauf zurück. Die massiven Stahlkluppen so rasch zu Kühlen wird immer schwieriger, sie speichern einfach die Hitze zu gut. Es werden daher immer komplexere Systeme zur Kluppenkühlung verwendet, die verhindern sollen, dass die Greifelemente, wenn sie die neue Folie am Einlauf aufnehmen, so heiß sind, dass sie den Film bereits teilweise schmelzen, was zu Filmrissen und anderen Problemen führt.

Zudem gibt es ein Problem mit den Kluppenhämmern bei unterschiedlichen Foliendicken. Heutige Anlagen sind ausgelegt für Folien-Enddicken von 10 bis 80 µm, manchmal bei "cavitated films" bis 200 µm. Die Kluppen schließen aber immer gleich und sind auf die dünnste Folie eingestellt. Damit kann es passieren, dass bei dicken Folien und sehr heißen Kluppen sich die Kluppenhämmer tief in die Folie "eingraben" und das so auch an den Rändern am Beginn der Streckzone wie unten beschrieben zu Filmrissen führt.

Bei hohen Geschwindigkeiten tritt ein weiteres Problem auf dort, wo das Kluppensystem vom geraden Transportbereich I in den Streckbereich II übergeht. Da die Kettenschiene und damit der Lauf der Kluppen ihre Richtung ändert und auseinander läuft, um die Folie zu verstrecken, findet zwischen den Kluppenhämmern zweier Kluppen neben der damit beginnenden Querverstreckung auch eine unerwünschte Längsverstreckung, also eine so genannte ungeplante Simultanverstreckung statt, vgl. Fig. 2. Das in einem Bereich, in dem die Folie von teilweise zu heißen Kluppen festgehalten wird und auch nicht kontrolliert, wie für eine solche Simultanverstreckung notwendig aufgeheizt ist.

Die Folie in der Kluppe und am Rand ist eher zu heiß, durch die heiße Kluppe, dazwischen ist sie eher zu kalt, da dort keine oder wenig heiße Luft nur die Strahlungswärme der Kluppe ankommt. Das macht die Folie bis zu einer gewissen Geschwindigkeit mit, danach reißt sie. Man muss bedenken, dass diese ungeplante Längsverstreckung (bei einem Kluppenabstand von 1 cm bei einem Winkel von 17 Grad) immerhin auf über 3 cm zwischen wenigen Kluppen erfolgt. Bei einer Geschwindigkeit von 500 m/min findet diese Längsstreckung innerhalb von nur ca. 0,0018 s. statt. Bei 700 m/min findet das nur mehr innerhalb von ca. 0,0012 s. statt. Verteilt sich der Öffnungswinkel auf einige mehrere Kluppen, so verteilt sich dieser ungewollte Längsreckprozesss entsprechend.

Bei bestehenden Kettenschienensystemen erfolgt dieses Auslenken und Rücklenken über das laterale Verschieben der Kettenschienen am jeweils nächsten Auflagepunkt des Kettenschienensystems. Das ist normalerweise am Ende jeder Reckzone üblicherweise jeweils 4 Meter.

Diese laterale Verschiebung der geraden Schiene an ihrem Ende in TD-Richtung bildet einen entsprechenden Winkel am Anfang dieser Schiene zu der ihr vorgelagerten Schiene.

Dieser Winkel bildet dann den Reckwinkel für die Folie in dieser Reckzone. Das bedeutet der Reckwinkel kann sowohl positiv als auch negativ von Zone zu Zone verstellt werden durch laterale Verschiebung der an sich geraden Schienenelemente an ihrem Ende.

Das ist in Fig. 1 dargestellt mit 5 jeweils 4 Meter langen Reckzonen.

Die Abbildung des Reckwinkels am Anfang jedes Schienenelementes des Kettenschienensystems mit Kluppen erfolgt unterschiedlich je nach dem verwendeten System, den geforderten Reckkräften und der Produktionsgeschwindigkeit.

Monorailsysteme führen die Kluppen auf einer vertikalen Schiene, wobei die Kluppen jeweils über Gleitelemente oder Rollenlager oben und unten an dieser Schiene befestigt sind und auf dieser in MD laufen.

Duorailsysteme haben eine obere und eine untere Schiene und halten und führen die Kluppen über Gleitelemente oder Rollenlager dazwischen eine von oben und eine Schiene von unten.

Die Systeme bieten unterschiedliche Möglichkeiten wie dieser Reckwinkel sich über die Schiene und die Kluppen am Eingang jeder Reckzone und am Ausgang abbildet. Das kann von einem ganz oder teilweise fixierten System mit wenig Flexibilität was die Einstellung der Reckwinkel angeht bis zu einem sehr flexiblen System mit sehr variablen Einstellmöglichkeiten reichen.

Grundsätzlich sind Duorailsysteme mit geringer Verstellmöglichkeit und einem vorgegebenen größeren Radius im Bereich der Reckwinkelverstellung laufsicherer und erlauben höhere Anlagengeschwindigkeiten. Ihr Nachteil ist die geringere Flexibilität in Bezug auf Einstellungen von Reckwinkel und Radius sowie ihre größere Bauhöhe, welche den Abstand der Düsenkästen zur Folie bestimmt mit den entsprechenden höheren Wärmeübergangs-Koeffizienten.

Monorailsysteme erlauben zwar eine flexiblere Einstellung der Reckwinkel und auch geringere Radien der eingestellten Winkel und haben normalerweise eine etwas geringere Bauhöhe und damit bessere Wärmeübergangswerte.

Rollenkettensysteme haben immer eine höhere Bauhöhe als Gleitkettensysteme.

Dazu kommt ein weiteres Problem für die Abnützung der verwendeten Gleitelemente oder Rollenlager, die die Kluppen mit der Schiene verbinden, wie folgt:
In den Zonen des Reckofens, wo die Kettenschienen geradeaus laufen, verteilen sich die Kräfte, da es nur geringe laterale Kräfte aus der Folie gibt, gleichmäßig auf bei Gleitsystemen 4 Gleitschuhe, bei Rollensystemen auf bis zu 8 Rollen. In der Reckzone kommen die Reckkräfte aus der Folie hinzu, die sich entsprechend dem Reckwinkel in Bezug auf die Kluppen nach hinten verlagern. Dazu kommen auch noch die Reckkräfte, die zur dahinterliegenden Kluppe entstehen aus der beschriebenen ungewollten Längsverstreckung der Folie zwischen den beiden Kluppen, wenn eine Kluppe durch die Auslenkung einen größeren Reckwinkel bekommt als die Kluppe in Laufrichtung dahinter.

All diese Kräfte verursachen, dass die Kluppe über die Folie versucht, bei einer Auslenkung nach rechts eben nach links zu kippen, woran sie durch die Schiene und eben die Gleit- oder Rollenelemente gehindert wird. Damit verlagern sich aber genau im Moment der Auslenkung die hier speziell verursacht durch diesen Effekt der ungewollten Längsverstreckung großen Kräfte auf nur mehr 50 % der Gleitoder Rollenelemente, was der Hauptgrund für deren Verschleiß ist. Dies zeigt Fig. 2.

Nochmals zusammengefasst, lässt sich folgendes feststellen.

Solange das System gerade in MD läuft, werden die Gleitelemente und Rollenlager entsprechend ihrer Auslegung beansprucht und nur den entsprechenden Transport und Haltekräften ausgesetzt.

Im Moment der Auslenkung kommen aber laterale Kräfte aus der Folie und solche aus der beschriebenen ungewollten Längsverstreckung hinzu und diese steigern sich entsprechend dem Auslenkwinkel und dem verwendeten Auslenkradius. Zudem verlagern sich die Kräfte vom Anfang der Auslenkung bis zum Ende der Auslenkung entsprechend von einem Winkel von 90 Grad nach hinten. Wenn man 15 Grad auslenkt, dann wird der Winkel 75 Grad.

Dadurch werden die Gleit- und Rollenelemente jeder Kluppe nicht mehr uniform, sondern sehr ungleich belastet, da die Kluppe ja über die nach hinten gerichtete Lateralkraft einem horizontalen Kippeffekt ausgesetzt ist. Die von diesen Gleit- oder Rollenelementen aufzunehmenden Kräfte verteilen sich nun auf die vorderen Folie-abgewandten und die hinteren folienseitigen Elemente jeder Kluppe und bedingen zusätzlichen Verschleiß.

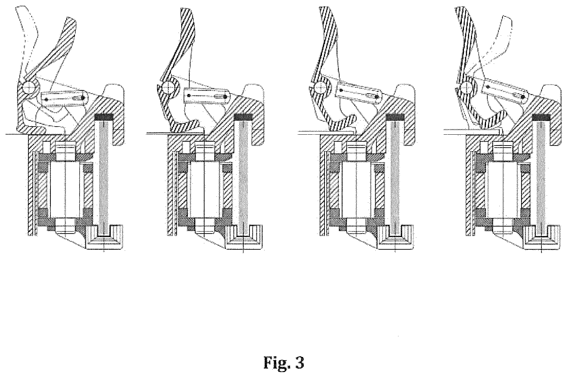

Ein weiterer Nachteil des Kluppensystems ist, dass die Kluppe die Folie am Einlauf des Reckofens einkluppt und am Auslauf wieder freigibt. Das Einkluppen erfolgt in der Weise, dass die Kluppe sich bei dünnerer Folie mehr und bei dickerer Folie weniger schließt. Fig. 3 zeigt den Grad des Schließens beim Einkluppen für verschiedene Foliendicken, und zwar von links nach rechts für ansteigende Foliendicken. Die Lateralkräfte der Folie schließen die Kluppe weiter.

Das bedingt, dass im Fall zu hoher Lateralkräfte, z.B. wenn das Temperaturprofil der Folie nicht stimmt, alle Reckkräfte über die Kluppe auf die Gleit- und Rollenelemente und von da auf die Schiene geleitet werden. Die Kluppen können die Folie niemals auslassen, sie greifen die Folie mit der steigenden Lateralkraft immer stärker. Eine solche Situation löst immer einen Bruch aus entweder der Folie oder des Kluppen- und Kettenschienensystems. Ein Auslassen der Folie durch die Kluppen ist nicht möglich. Ein Folienriss ist nicht weiter schlimm, aber wenn bei dicker zu kalter Folie am Anfang der Reckzone können zu Schäden am Kettenschienensystem führen.

Die Grenzen der Belastbarkeit des Materials sind jedoch mit den Systemen des Standes der Technik erreicht. Mit anderen Worten, mit einem zunehmend höheren Folienausstoß und entsprechend höheren Geschwindigkeiten dürfte die Kettenschienen-/ Kluppenlösung technisch und wirtschaftlich immer schwieriger umzusetzen sein.

WO2017/215731A1 betrifft eine Basisstruktur gemäß dem Oberbegriff des Anspruchs 1.

Aufgabe ist es daher, Basisstrukturen, Vorrichtungen und Verfahren zum Transport und zur TD-Verstreckung von Folie bereitzustellen, mit welchen die beschriebenen Nachteile zumindest teilweise beseitigt werden können.

Diese Aufgabe wird durch die Basisstrukturen, Vorrichtungen und Verfahren gemäß den Ansprüchen gelöst.

Bereitgestellt wird demnach eine Basisstruktur für eine Vorrichtung zum Transport von Folie, wobei die Basisstruktur aufweist:
genau eine obere Führungseinheit und genau eine untere Führungseinheit, wobei
die obere Führungseinheit zum Führen eines oberen beweglichen Seiles ausgestaltet ist und die untere Führungseinheit zum Führen eines unteren beweglichen Seiles ausgestaltet ist, wobei
das obere Seil und das untere Seil anordenbar sind, um die Folie an deren Seitenrand zumindest stellenweise zu klemmen und mitzunehmen, und wobei
zumindest eine Führungseinheit der Führungseinheiten ausgestaltet ist, die Folie über das von der Führungseinheit geführte Seil gegen das von der anderen Führungseinheit geführte Seil zu drücken,
wobei jede Führungseinheit jeweils genau ein Rollenelement aufweist, welches ausgestaltet ist, das jeweilige Seil zu führen,
wobei die Basisstruktur einen Stegabschnitt aufweist, über welchen die Basisstruktur mit einer zweiten ihr gleichartigen Basisstruktur verbindbar ist.

Gleichartig heißt, dass die weitere Basisstruktur exakt die erfindungsgemäß ausgestaltete Basisstruktur sein kann.

Die aus dem Stand der Technik bekannte Ketten-/Kluppenlösung zum Transport der Folie wird also durch eine Lösung mit geführten Seilen ersetzt. Dies führt zu einer Vereinfachung des Aufbaus. Zugleich sind höhere Transportgeschwindigkeiten möglich, weil sich Seile sehr gut antreiben, bewegen und umlenken lassen. Das Verhältnis der bewegten Massen der Folie und der Seile verbessert sich im Vergleich zu den sehr schweren Kettenschienensystemen enorm.

Der Stegabschnitt kann eine drehbare Verbindung zu der zweiten Basisstruktur vermitteln. Drehbar bedeutet hier, dass die eine Basisstruktur um eine vertikale Achse drehbar gegenüber der anderen Basisstruktur ist. Die Verbindung kann auch fix sein, also nicht drehbar sein.

Die Basisstruktur kann einen Halteabschnitt aufweisen, der zum Halten der beiden Führungseinheiten dient und an dem der Stegabschnitt angeordnet ist und mit dem der Stegabschnitt einer dritten ihr gleichartigen Basisstruktur verbindbar ist.

Der Halteabschnitt kann eine drehbare Verbindung zu der dritten Basisstruktur vermitteln. Drehbar bedeutet auch hier drehbar um eine vertikale Achse. Es kann auch eine fixe Verbindung zu der dritten Basisstruktur vermittelt werden.

Es kann eine Dämpfungseinrichtung vorgesehen sein, die zwischen der Basisstruktur und der zweiten Basisstruktur angeordnet ist, zum Dämpfen von Schwingungseffekten der Basisstruktur und/oder der Seile.

Es kann ein Druckelement vorgesehen sein, insbesondere ein pneumatisches Druckelement, welches vorgesehen ist, das eine Rollenelement gegen das andere Rollenelement zu drücken, wobei die Klemmung der Folie durch die Rollenelemente (20, 30) und deren Druck auf die Seile bewirkt wird und die Folie zwischen das obere Seil auf der oberen Folienfläche und das untere Seil auf der unteren Folienfläche klemmbar ist.

Mit nur einem Typ von Basisstruktur lassen sich Reihen von Basisstrukturen bilden, die dann eine Vorrichtung zum Transport von Folie ergeben.

Die Erfindung umfasst demnach auch eine Vorrichtung zum Transport von Folie in einer Transportrichtung, MD, insbesondere für eine Reckanlage, aufweisend:
zwei Reihen von Basisstrukturen gemäß der oben spezifizierten Erfindung, wobei die eine Reihe in Transportrichtung rechts angeordnet ist und die andere Reihe in Transportrichtung links angeordnet ist, wobei die zumindest zwei Reihen von Basisstrukturen ausgestaltet sind, die jeweils von ihnen führbaren Seile mit gleicher Geschwindigkeit zu führen.

Die rechts angeordnete Reihe und die links angeordnete Reihe kann jeweils eine erste Anzahl fix miteinander verbundener Basisstrukturen umfassen und eine zweite Anzahl drehbar miteinander verbundener Basisstrukturen umfassen.

Die erste Anzahl von Basisstrukturen kann ersten Bereich I und einen dritten Bereich III bilden und die zweite Anzahl von Basisstrukturen einen zweiten Bereich II bilden, wobei der zweite Bereich II in Transportrichtung zwischen dem ersten Bereich I und dem dritten Bereich III angeordnet ist und wobei der erste Bereich I parallel zur Transportrichtung MD angeordnet ist und der dritte Bereich III in einem vorbestimmten Reckwinkel zu der Transportrichtung angeordnet ist und alle Basisstrukturen des zweiten Bereiches II um einen gleichen Winkel gegenüber einer in Transportrichtung ihr benachbarten Basisstruktur gedreht sind, wobei die Summe der Winkel den Reckwinkel ergibt.

Die Vorrichtung kann weiter aufweisen: erste Folienheizeinrichtungen, die im ersten Bereich I in Transportrichtung zwischen einzelnen Basisstrukturen angeordnet sind und auf die Folie gerichtet sind.

Die Erfindung umfasst auch ein Verfahren zum Transport von Folie in einer Transportrichtung, MD, insbesondere für eine Reckanlage, wobei ein oberes sich bewegendes Seil und ein unteres sich bewegendes Seil geführt werden,
wobei jedes Seil durch jeweils genau ein Rollenelement geführt wird und das eine obere geführte Seil und das zumindest eine untere geführte Seil die Folie an deren Seitenrand zumindest stellenweise zwischen sich klemmen und mitnehmen, wobei Basisstrukturen gemäß der Erfindung zur Verwendung kommen.

Die Verwendung von Seilen- und Rollensystemen statt Kluppen- bzw. Kettensystemen ermöglicht also eine höhere Anlagengeschwindigkeit und höhere Durchsatzleistungen somit einen höheren Ausstoß der Anlage bei einfacherem Aufbau.

Die Erfindung und Ausführungsbeispiele werden anhand der Zeichnung näher beschrieben. Hierin zeigt
- Fig. 1: eine Folientransportvorrichtung des Standes der Technik;
- Fig. 2: den Übergang zwischen Aufheizbereich und Reckbereich bei der Transportvorrichtung der Fig. 1;
- Fig. 3: den Grad des Schließens beim Einkluppen für verschiedene Foliendicken;
- Fig. 4: eine Basisstruktur gemäß einem ersten Ausführungsbeispiel der Erfindung;
- Fig. 5: eine Sicht von oben auf die rechte Seite einer Reihe von Basisstrukturen gemäß Fig. 4;
- Fig. 6: eine Sicht von oben auf die rechte Seite einer weiteren Reihe von Basisstrukturen gemäß Fig. 4;
- Fig. 7: eine Lateralkräfteverteilung der Reihe gemäß Fig. 6;
- Fig. 8-10: Sichten aus verschiedenen Perspektiven auf eine Reihe von Basisstrukturen gemäß Fig. 4;
- Fig. 11: eine Reihe von Basisstrukturen mit Folien- Einlauf und -Auslauf sowie Seilrücklauf;
- Fig. 12: Ein Detail einer Umlenkrolle am Einlauf oder Auslauf.

Im gesamten vorliegenden Text beziehen sich Angaben zur Orientierung wie "links", "rechts", "oben", "unten", "seitlich" auf die Transportrichtung MD bzw. auf die Folie 100, sofern nicht anders angegeben. Die Folie sei mit ihrer Oberfläche horizontal orientiert. Hierauf beziehen sich die vorgenannten Angaben im Text, sofern dort nicht anders angegeben.

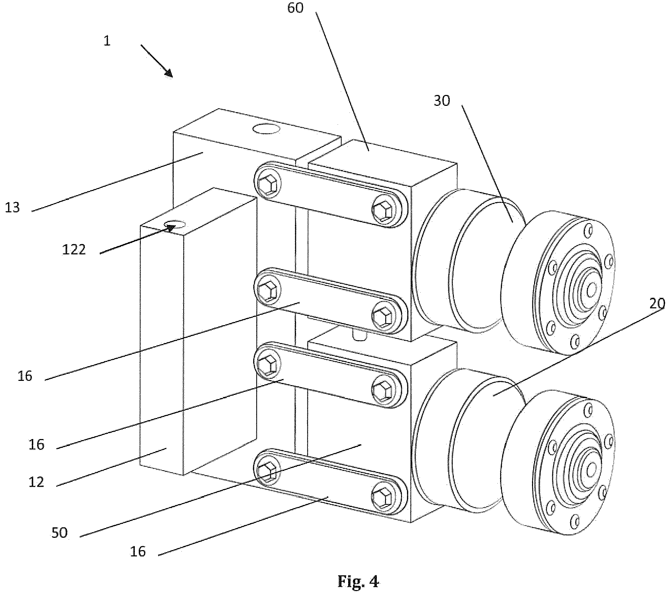

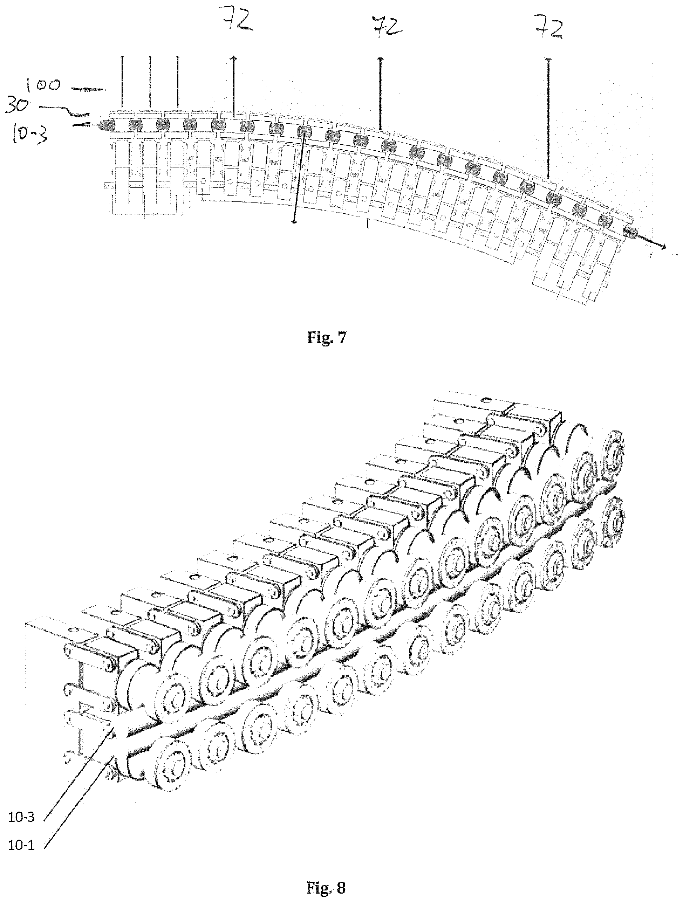

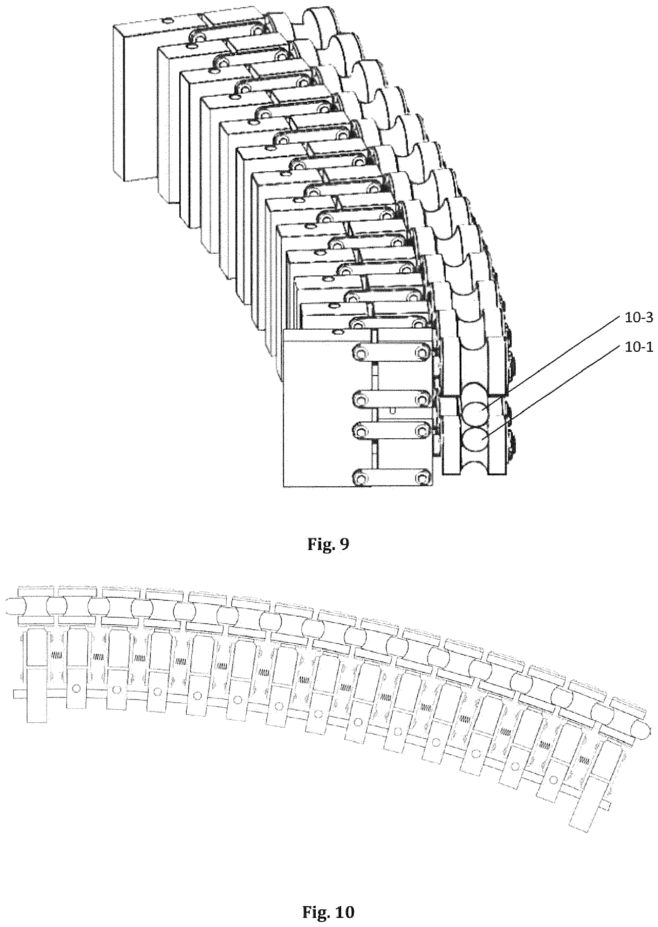

Fig. 4 bis 12 illustrieren grundlegende Prinzipien der Erfindung. Die erfindungsgemäße Basisstruktur 1 für eine Vorrichtung zum Transport von Folie 100 weist auf (vgl. insbesondere Fig. 4 und Fig. 8): Eine obere Führungseinheit 60 und eine untere Führungseinheit 50, wobei die obere Führungseinheit 60 zum Führen eines oberen beweglichen Seiles 10-3 ausgestaltet ist und die untere Führungseinheit 50 zum Führen eines unteren beweglichen Seiles 10-1 ausgestaltet ist, wobei das obere Seil 10-3 und das eine untere Seil 10-1 anordenbar sind, um die Folie 100 an deren Seitenrand zumindest stellenweise dazwischen zu klemmen und mitzunehmen, wobei zumindest die eine Führungseinheit 50, 60 der Führungseinheiten 50, 60 ausgestaltet ist, die Folie 100 über das von der Führungseinheit 50, 60 geführte Seil 10-3 gegen das von der anderen Führungseinheit 50 geführte Seil 10-1 zu drücken. Des Weiteren umfasst die Basisstruktur 1 einen Halteabschnitt 13 und einen Stegabschnitt 12 auf. Der Halteabschnitt 13 trägt die beiden Führungseinheiten 50, 60, die jeweils über Schenkel 16 an ihn angelenkt sind, der Stegabschnitt 12 stellt die Verbindung zur benachbarten Basisstruktur 1 her, vgl. Fig. 10. Diese Verbindung kann eine Drehung gegenüber der benachbarten Basisstruktur 1 erlauben, und zwar vorzugsweise bis zu einen definierten maximalem Winkel (in der Horizontalen). Die Basisstrukturen jeweils einer Seite sind identisch zueinander.

Die untere Führungseinheit 50 kann dazu ausgestaltet sein, die obere Führungseinheit 60 zu stützen.

Die Folie 100 liegt auf dem unteren Seil 10-1 auf und ist durch das untere Seil 10-1 sowie das obere Seil 10-3 geklemmt. Auf diese Weise ist die Folie 100 mit den beweglichen Seilen in Transportrichtung MD transportierbar.

Als obere Führungseinheit 60 sei diejenige bezeichnet, deren Seil 10-3 die Folie 100 auf deren Oberseite berührt, die untere Führungseinheit 50 sei diejenige, deren Seil 10-1 die Folie 100 auf deren Unterseite berührt.

Die betreffende obere Führungseinheit 60 oder ein Teil davon ist vertikal beweglich ausgestaltet. Die Lagerung der Rollenelemente der oberen Führungseinheit ist also so ausgestaltet, dass der Druck gemessen und eingestellt werden kann.

Jede Führungseinheit 50, 60 umfasst jeweils ein Rollenelement 20, 30, welches ausgestaltet ist, das jeweilige zumindest eine Seil 10-1, 10-3 zu führen. Die untere Führungseinheit 50 ist beweglich ausgestaltet, und die obere Führungseinheit 60 ist ebenfalls 50 beweglich fixiert.

Gemäß Fig. 4 weist die obere Führungseinheit 60 genau ein Rollenelement 30 auf, welches oberhalb des von der oberen Führungseinheit geführten Seiles 10-3 angeordnet ist. Die untere Führungseinheit 50 weist genau ein weiteres Rollenelement 20 auf, welches unterhalb des von der unteren Führungseinheit geführten Seiles 10-1 angeordnet ist.

Druck auf das jeweilige Seil kann von oben und/oder unten ausgeübt werden.

Eine Basisstruktur 1 mit ihren Führungseinheiten 50, 60 ist über den Halteabschnitt 13 mit einer benachbarten Basisstruktur 1 fix verbunden oder ist drehbar verbunden, wenn eine Auslenkung in TD realisiert werden soll.

Die obere Führungseinheit 60 ist also mit der unteren Führungseinheit 50 horizontal beweglich und bietet auch die Möglichkeit, den Druck auf das obere Seil 10-3 und damit die Klemmkraft auf die Folie 100 zu beeinflussen. Die obere Führungseinheit 60 besitzt vorzugsweise die gleiche Länge wie die untere Führungseinheit 50. Die Führungseinheiten bzw. ihre Rollenelemente 20, 30 sind bezüglich ihrer Rollendrehpunkte vertikal übereinander angeordnet. Die beiden Rollenelemente haben vorzugsweise ein und denselben Durchmesser.

Mit einer Mehrzahl von erfindungsgemäßen Basisstrukturen 1 werden ein oder mehrere Bereiche realisiert. Die Führungseinheiten 50, 60 in einem Bereich können unterschiedlich zu den Führungseinheiten 50, 60 in einem anderen Bereich sein. Die Bereiche können - müssen aber nicht - den eingangs erläuterten Bereichen I bis IV entsprechen.

Die Klemmkraft auf die Folie 100 entsteht durch den Druck des einen Seiles 10-3 gegen das andere Seil 10-1. Die Klemmkraft auf die Folie 100 wird durch Mittel eingestellt, welche auf die eine oder beide der Führungseinheiten 50, 60 oder Teile davon (z.B. die Rollenelemente) wirken. Diese Mittel können, zusätzlich zu der Schwerkraft der Führungseinheiten 60 und des oberen Seils 10-3, Vorrichtungen umfassen, welche Druck auf die Führungseinheiten 60 oder Teile davon (z.B. die Rollenelemente) ausüben, den diese über das Seil 10-3 weitergeben. Diese Vorrichtungen können z.B. pneumatisch, hydraulisch und/oder elektrisch wirken. Zusätzlich können Vorrichtungen vorgesehen sein, die den Druck der Klemmung erfassen und in Abhängigkeit von dem erfassten Druck den Druck auf die jeweiligen Führungseinheiten 50, 60 oder Teile davon justieren.

Es besteht auch die Möglichkeit, über die Seilspannung etwas die Klemmkraft der Seile zu beeinflussen, speziell in den Bereichen, wo nicht unmittelbarer Druck über die Seilrollen erfolgt.

Jedes Seil 10-1, 10-3 ist hier ein Endlosseil, insbesondere ein aus Stahl gefertigtes Seil. Ein derartiges Endlosseil lässt sich z.B. durch Spleißen der Enden eines Seils herstellen.

Die Seile können auch einen Kern aus Plastik haben oder z.B. eine raue Oberfläche und/oder eine Plastikhülle um ein Metall- oder Kunststoffseil herum aufweisen.

Auch können die Seile reine Kunststoffseile sein oder aus einer Mischung aus Stahl und Kunststoff bestehen. Diese Seile können auch eine glatte Oberfläche aufweisen oder entsprechend mit einer Kunststoff-Hülle überzogen sein.

Zumindest ein Seil kann (z.B. in seinem Kern) Vorrichtungen zur Messung von Prozessdaten wie z.B. Temperaturen und/oder Datenleitungen und zur Übertragung der Prozessdaten oder davon abgeleiteter Daten nach außerhalb des Seiles aufweisen.

Durch die Wahl der Materialien für die Seile kann die Klemmwirkung sowie auch die Temperatur der Seile beeinflusst werden. So lässt sich ein Seil mit Kunststoffanteil leichter auf niedriger Temperatur halten und somit besser kühlen, weil es weniger Wärme aufnimmt. Ein Seil, das im Vergleich zu der Folie auf niedrigerer Temperatur ist, kann hinsichtlich des Anhaftens der relativ hierzu wärmeren Folie am Seil effektiver sein. Die Seile lassen sich sehr effizient mit Luft kühlen. Dies kann, sofern überhaupt nötig, in einfacher Weise am Rücklauf der Seile erfolgen, also dort, wo die Seile üblicherweise nicht durch die erfindungsgemäßen Führungseinheiten geführt werden. Auch dies ist ein Vorteil gegenüber dem Kluppensystem, wo sich die sehr stark aufheizenden Kluppen mitsamt Ketten aufgrund der großen sich bewegenden Massen - und insbesondere bei hohen Transportgeschwindigkeiten - nur noch schlecht kühlen lassen. Der Kettenrücklauf mag hierzu dann nicht mehr ausreichen.

Die Führungselemente 1 sind statisch, können also z.B. eingehaust werden, um darin dann von der folienabgewandten Seite (also von hinten) zum Beispiel mit kalter Luft gekühlt werden. Die Einhausung kann für einzelne Führungselemente separat erfolgen oder für mehrere Führungselemente gemeinsam, z.B. in der Aufheizzone (Bereich I).

Zusätzlich können die Rollenelemente 20, 30 über ihre Achsen gekühlt werden.

Die Beschaffenheit der Oberfläche der Seile spielt auch eine Rolle beim Klemmen, Verstrecken und Transportieren der Folie. So kann durch eine Aufrauhung der Oberfläche oder aber durch eine sehr glatte Oberfläche die Anhaftung der Folie beeinflusst werden, unabhängig von der Klemmung. Über eine richtungsanisotrope Beschaffenheit (Rauheit, Glätte) der Seile kann z.B. ein gewisser Schlupf der Folie in der einen Richtung (z.B. in MD) begünstigt werden, während der Schlupf in der anderen Richtung (z.B. TD) verringert oder ganz verhindert wird. Hiermit könnten Laufwegunterschiede der Seile bei versetzter Anordnung beim Übergang zwischen dem Bereich I und dem Bereich II ausgeglichen werden.

Um den Schlupf zu minimieren bzw. gänzlich zu vermeiden, können die Seiloberflächen Mantel überzogen werden, z.B. aus Kunststoff.

Auch kann das obere Seil 10-3 eine andere (insbesondere entgegengesetzte) Schlagrichtung aufweisen als das untere Seil 10-1. Zusätzlich zur Schlagrichtung kommt auch die Schlagart als Gleichschlag oder Kreuzschlag in Betracht. Dann können die Litzen des oberen Seiles 10-3 und des einen unteren Seiles 10-1 besser ineinander zum Liegen kommen mit zusätzlicher Wirkung hinsichtlich Schlupf und Klemmung der Folie 100.

Des Weiteren können die Seile unterschiedlich dick sein. So kann z.B. das untere Seil 10-1 dicker als das obere Seil 10-3 sein. Vorzugsweise sind beide Seile aber gleich beschaffen.

Die Führungseinheiten 50, 60 bzw. ihre Rollenelemente 20, 30 können für eine noch bessere Klemmung der Folie auch in TD oder in MD zueinander versetzt sein. Bei einer Versetzung in MD sind die Drehachsen der Rollenelemente 20, 30 nicht mehr vertikal übereinander. Bei einer Versetzung in MD sind drehen sich die Rollenelemente 20, 30 nicht in derselben Ebene.

Die Rollenelemente 20, 30 können mit ihren Laufflächen die Seile jeweils mehr oder weniger stark umgreifen und somit auch führen.

Zumindest zwei Reihen von Basisstrukturen 1 bilden zusammen eine Vorrichtung zum Transport von Folie 100 in einer Transportrichtung MD, insbesondere für eine Reckanlage, wobei die eine Reihe von Basisstrukturen 1 in Transportrichtung MD links angeordnet ist und die andere Reihe von Basisstrukturen 1 in Transportrichtung MD rechts angeordnet ist, wobei die zumindest zwei Reihen von Basisstrukturen ausgestaltet sind, die jeweils von ihnen führbaren Seile mit gleicher Geschwindigkeit zu führen.

Die linke Reihe von Basisstrukturen 1 ist also angeordnet, die Folie 100 an ihrem linken Rand zu klemmen, und die rechte Reihe von Basisstrukturen 1 ist angeordnet, die Folie 100 an ihrem rechten Rand zu klemmen. Entsprechend den verschiedenen Anforderungen in den Bereichen I bis IV (vgl. Fig. 1) an die Führung der Seile können die Reihen von Basisstrukturen dort jeweils unterschiedlich ausgestaltet sein. Im Folgenden werden unterschiedliche Varianten beschrieben.

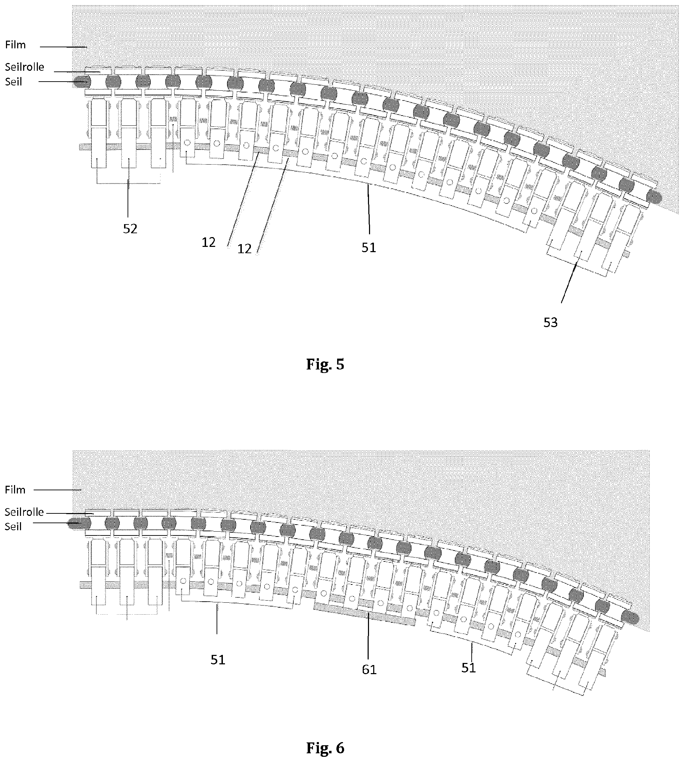

Im Folgenden werden weiterhin mit Bezug auf Figuren 5 bis 12 verschiedene Konfigurationen von Reihen von Basisstrukturen 1 beschrieben. Die Begriffe Basisstruktur 1 und Führungselement 1 (im Unterschied zur Führungseinheit 50, 60) werden synonym verwendet. Die Auslenkung oder Zurücklenkung der Seile (und hierüber der Folie) erfolgt ebenfalls durch laterale Verschiebung oder Verdrehung einer aus einer Anzahl solcher Führungseinheiten bestehenden gerade laufenden Basisstruktur an dessen Ende in TD gesehen. Hier sind die Führungselemente 50, 60, welche die Rollenelemente 20 bzw. 30 tragen, mechanisch fix verbunden und erlauben damit keinen sich öffnenden oder schließenden Winkel zwischen den benachbarten Führungseinheiten 1.

Im Bereich 51 in Fig. 5 einer gewollten oder möglichen Auslenkung oder Zurücklenkung sind die einzelnen Führungselemente 1 zueinander drehbar miteinander verbunden. Das erste Führungselement 1 am Anfang dieses Bereichs, in dem die einzelnen Führungselemente 1 drehbar miteinander verbunden sind, und das letzte Führungselement 1 am Ende dieser Zone sind mit den vorgelagerten oder nachgelagerten fix verbundenen Führungselementen 1 ebenfalls fix verbunden, vgl. 52 und 52 in Fig. 5.

Wenn nun der Winkel über eine laterale Verschiebung der nachgelagerten fix verbundenen Führungselemente 1 verändert wird, bildet sich dieser über die Anzahl der drehbar verbundenen Führungselemente in der Weise ab, dass er sich auf die einzelnen drehbaren Führungselemente gleichmäßig verteilt. Beispiel: Ein Reckwinkel von 12 Grad wird durch Verschiebung/Verdrehung der fix verbundenen Führungselemente 1 eingestellt. Im Fall von 10 drehbar verbundenen Führungselementen verteilt sich dieser Reckwinkel nun gleichmäßig auf diese Führungselemente mit einem Winkel von jeweils 1,2 Grad zwischen jeweils zwei benachbarten Führungselementen. Die Summe der Winkel zwischen jeweils zwei Führungselementen ergibt also den Reckwinkel.

Die Anzahl der drehbar miteinander verbundenen Führungselemente 1, die Festlegung eines Maximalwinkels zwischen diesen Führungselementen 1 erlauben eine sehr flexible Einstellung des Reckwinkels sowie des Radius, in welchem dieser ungesetzt wird.

Die Anzahl der drehbar verbundenen Führungselemente 1 erlaubt zusätzlich sehr flexible Einstellungen, indem man die Anlage auf eine größere Anzahl von drehbar verbundenen Führungselementen 1 auslegt, z.B. 20 mit einem Auslenkbereich von dann ca. 1,2 Meter. Dieser würde nun einen Reckwinkel von 12 Grad auf 20 drehbar verbundene Führungselemente zu jeweils 0,6 Grad verteilen und das Auslenken auf den vollen 1,2 Metern durchführen.

Man kann nun bis zum maximalen Verstell-Winkel zwischen den drehbar verbundenen Führungselementen 1 weitere dieser drehbar verbundenen Führungselemente mit den fix verbundenen Führungselementen davor oder danach mechanisch fix verbinden, um so einen kleineren Auslenkradius für die gewünschten 12 Grad zu erreichen. In diesem Fall müssen bei einem maximalen Winkel von in diesem Beispiel 1,5 Grad zwischen den drehbar verbundenen Führungselementen 8 der 20 Führungselemente drehbar miteinander verbunden sein, und es ergibt sich ein entsprechend kleinerer Auslenkradius. Der maximale Winkel könnte aber prinzipiell bis zu 4 Grad betragen.

Wenn prozesstechnisch gewünscht, können auch einige Führungselemente innerhalb dieser z.B. 20 drehbar verbundenen Führungselemente 51 in Fig. 6 fix gerade verbunden werden, womit sich der Radius z.B. auf 2 Radien verteilt, vgl. 61 in Fig. 6. Auch eine Verbindung, die einen fixierten negativen Reckwinkel in dieser Zone darstellt, ist möglich.

Diese fix verbundenen Führungselemente 1 verteilen den eingestellten Aus- oder Zurücklenkwinkel entsprechend linear und können sich zueinander im festgelegten Rahmen, sofern nicht fixiert, frei drehen. Um bei hohen Geschwindigkeiten Schwingungseffekte bei den Führungselementen und/oder den Seilen zu vermeiden, ist vorgesehen, zwischen diesen Führungselementen so genannte Bremseinrichtungen (also eine Dämpfungseinrichtung) in Form von Federn oder dergleichen einzurichten. Der einmal durch die Lateralverschiebung eingestellte Reckwinkel kann sich zwar frei zwischen diesen drehbar verbundenen Führungselementen 1 verteilen, bleibt aber dann so fixiert bis zu einer anderen Einstellung des Reckwinkels.

Die Vorteile der Erfindung: Die variable Einstellmöglichkeit des Reckwinkels und des Radius, in welchem dieser ungesetzt wird. Das ist bei der Folienproduktion sehr vorteilhaft, da sich gewisse Eigenschaften der Folie über die Einstellung des Reckwinkels bzw. der Reckwinkel und des Radius beeinflussen lassen. Um gewisse Eigenschaften der Folie zu erreichen, muss man oft einen hohen Anfangswinkel mit geringem Radius einstellen, dann etwas nachlassen, also einen negativen Winkel einstellen, um danach nochmals zu verstrecken, um das gewünschte Reckverhältnis zu erreichen.

Es gibt keine ungewollte Längsverstreckung.

Die Verteilung der Kräfte in der Auslenk- und Reckphase: Anders als bei den Kluppensystemen wie oben beschrieben verteilen sich die in der Reckphase und insbesondere der Auslenkphase auftretenden Lateralkräfte 72 wesentlich besser, vgl. Fig. 7.

Es gibt hier durch das permanente Klemmen durch die Seile keine ungewollte Längs- Verstreckung mit den entsprechenden Kräften, die auf das System wirken.

Die Lateralkräfte die sich im Zuge der Auslenkung entsprechend dem Auslenkwinkel nach hinten in TD verlagern haben nicht denselben negativen Effekt wie auf die dadurch kippenden Kluppen.

Im Gegenteil, die Seile und die diese führenden Laufrollen werden durch die nach vorne gezogenen Seile weniger belastet, wenn sich die Richtung der Lateralkraft zur Laufrichtung nach hinten verschiebt.

Zusätzlich gleichen sich die Lateralkräfte, die auf die folienseitigen Innenseiten der Laufrollen wirken, mit jenen aus die über die Umlenkung der Seile auf die folienseitigen Außenseiten der Laufrollen wirken.

Über die Seilspannung ergeben sich entsprechende Ausgleichs und Einstellmöglichkeiten dieser Kräfte.

Das Halten und Auslassen der Folie: Anders als bei Kluppensystemen, die die Folie immer vollkommen fixieren und auch nicht auslassen können, was wie oben beschrieben auch zum Bruch des gesamten Kettenschienensystems führen kann, wenn die Reckkräfte zu hoch werden, ist der Druck der oberen und der unteren Führungseinheiten auf die jeweiligen Seile für jede Führungseinheit variabel einstellbar.

Das bedeutet, man wird in den Zonen ohne Lateralkräfte mit dem gerade zum Halten der Folie notwendigen Anpressdruck arbeiten und in den Zonen mit höheren und entsprechend der Foliendicke verschiedenen Lateralkräften den Druck entsprechend erhöhen, aber eben immer nur einen bestimmten Prozentsatz über der benötigten Haltekraft.

Dieses System kann aber auch auf Befehl oder automatisch über eingestellte Parameter alle oder bestimmte Führungselemente öffnen und so die Folie auslassen, wenn z.B. ein Temperaturabfall vor der Reckzone passiert, welcher die Reckkräfte ansteigen lässt.

Die geringe Bauhöhe: Dieses System ermöglicht eine wesentlich geringere Bauhöhe im Vergleich zu bekannten Ketteschienen- und Kluppensystemen.

Diese geringe Bauhöhe ermöglicht es, die Heizeinrichtungen (Düsenkästen) und damit das Anblasen der Folie mit heißer Luft wesentlich näher an die Folie zu bringen.

Damit kann man die Luftgeschwindigkeit und somit die Menge an heißer Luft, die zum Aufheizen benötigt wird, reduzieren, oder eben die Temperatur der Luft. Gleichzeitig kann man dadurch auch die Länge insbesondere der Aufheizzone reduzieren, alles verbunden mit den entsprechenden Einsparungen an Energie und Investitionskosten. Auch kann man beim Umbau bestehender Anlagen durch entsprechenden Umbau der Düsenkästen diese näher an die Folie bringen und damit den Folienausstoß solcher Anlagen entsprechend erhöhen.

Die einzelnen Führungselemente 1 sind auf einer Schiene angebracht, die über die jeweilige Zone reicht aber auch kürzer sein kann.

Wo die Seile gerade geführt sein sollen, sind die Führungselemente 1 gerade verbunden. Das kann man aber frei entscheiden. Wenn nun am Ende einer derartigen fixen Verbindungsstrecke, z.B. nach den 4 Metern, auf der nächsten Auflage der Winkel verstellt wird (z.B. man stellt einen Reckwinkel ein von 12 Grad), dann wird dieser am Anfang dieser fixierten Führungselemente über die nicht fixierten Führungselemente abgebildet. Das kann als "Schlangeneffekt" bezeichnet werden. Eine Schlange, wenn sie um die Kurve kriecht, macht das nicht von einem Wirbel zum anderen, sie verteilt die Krümmung auf eine bestimmte Anzahl ihrer Wirbel in der Kurve, und da gleichmäßig. Die Seile und die Kräfte auf die Lager erlauben einen Winkel zwischen den jeweiligen Führungselementen von bis zu 4 Grad maximal. Das bedeutet, wenn die fixe Schiene um 12 Grad ausgelenkt wird, dann würden diese 12 Grad sich bei 10 nicht fixierten Führungselementen zwischen diesen fixen Schienen auf 11 Zwischenräume verteilen, also auf 1,09 Grad pro Zwischenraum. Dasselbe funktioniert auch beim Zurücklenken am Ende der Reckzone. Man spart damit weitere Führungselemente für die jeweiligen Auslenkungen, das nehmen die oberen und unteren Lager auf.

Die drehbaren Führungselemente, welche zusammen den Reckwinkel bilden, sind frei drehbar und müssen nicht zueinander fixiert werden, um den Reckwinkel zu realisieren. Es hat sich herausgestellt, dass sich die konstanten Winkeländerungen jeweils zweier benachbarter Führungselemente von selbst einstellen, wenn nur die fixen Basisstrukturen (bzw. die Schienen, welche die Reihen von Basisstrukturen tragen), zwischen denen die drehbaren Basisstrukturen angeordnet sind, im gewünschten Reckwinkel zueinander angeordnet sind.

Ein besonderer Nachteil von Kluppensystemen ist, dass dort die Lager- bzw. Gleitschuhauslegung vom Geradelauf her dimensioniert ist, bedeutet, wenn die Folie gerade läuft, verteilen sich die Kräfte gleichmäßig auf die Lager bzw. Gleitschuhe. Wenn aber ausgelenkt wird, dann kommen erst die Lateralkräfte der Verstreckung und der so genannten ungewollten Längsverstreckung dazu, und diese verlagern sich bezogen auf die einzelne Kluppe entsprechend dem eingestellten Reckwinkel von der 90 Grad Position nach hinten. Das bedeutet, die Kluppe erhält größere Kräfte auf die Lager und Gleitelemente, und diese sind nicht mehr optimal verteilt. Die Kräfte gehen nun vornehmlich auf die vorderen hinteren und hinteren vorderen Lager und Gleitelemente und führen dort zu Verschleiß.

Das Seilsystem muss in der Auslenkung, was die Lateralkräfte der Folienverstreckung betrifft, mit den gleichen Kräften leben, allerdings kommen hier die Kräfte aus einer ungewollten Längsverstreckung nicht hinzu, da eine solche nicht stattfindet. Die Kräfte verteilen sich auf die Lager oben und unten und wandern da eben vom optimalen Druckpunkt oben und unten in der Mitte in die Wandung der Lager. Aber die Verlagerung der Reckkräfte nach hinten bei der Auslenkung ist hier positiv, da dadurch Kräfte von den Lagern in das ziehende Seil verlagert werden.

Außerdem heben sich die Kräfte auf die folienseitige Innenwand der Lager durch die Reckkräfte und auf die folienabgewandte Innenwand der Lager durch die Umlenkung des Seiles zum Teil auf und kann das über die Seilspannung auch beeinflusst / optimiert werden.

Das erfindungsgemäße System mit einer Bauhöhe von ca. 180 mm hat eine um ca. 50 % reduzierte Bauhöhe im Vergleich zu bekannten Rollenketten-Systemen und ca. 40 % im Vergleich zu bekannten Gleitkettensystemen und damit eine entsprechende Verbesserung der Wärmeübergangskoeffizienten durch die Möglichkeit, die Luftdüsen näher an die Folie zu bringen.

Je nach Anforderung können die Basisstrukturen ausgestaltet sein, um die Seile in Querrichtung TD zur Transportrichtung MD und in vertikaler Richtung zu fixieren. Hierfür können jeweils Rollenelemente vorgesehen sein, welche zur Fixierung beitragen.

Zum Zweck der Wartung können die Rollenelemente einzeln von außen ausgetauscht werden, indem die betreffenden Achsen entfernt werden können. Einfache Inspektion und Austauschbarkeit der Rollenelemente erhöhen die Produktivität der Anlage, weil die Standzeiten reduziert werden.

Die Führungselemente 50, 60 können so ausgestaltet sein, dass sie als Ganze voneinander ausgetauscht werden können.

Für die Ausgestaltung der Führungseinheiten 50, 60 gibt es noch zahlreiche weitere Abwandlungen, z.B. um die Führung der Seile zu optimieren.

Die Führungseinheiten 50, 60 sind aus Metall gefertigt, die Rollenelemente 20, 30 ebenfalls. Andere Materialien sind auch möglich, wenn sie ausreichende mechanische und thermische Stabilität aufweisen.

Einfädeln der Folie und Umlenkung: Es gibt die beiden Umlenkungen am Ein- und am Auslauf. Der Einlauf kann, wenn nötig, auch als Bremse verwendet werden, um die Seilspannung zu erhöhen.

Hierzu wird die Folie zwischen die beiden Umlenkräder der beiden Seile hineinfahren gelassen.

Vorteilhafterweise ist der Hauptantrieb der Seile vor oder nach der Umlenkung selbst angeordnet. Die Umlenkung mittels Umlenkungsrollenelement sorgt für die notwendige Seilspannung im Vorlauf, wohingegen die Seilspannung am Rücklauf der Seile von untergeordneter Bedeutung ist. Zum Hauptantrieb können zusätzliche Antriebe hinzukommen, die an anderer Stelle des Seiles angeordnet sind.

Die Seile sind so angetrieben, dass sie alle mit gleicher Geschwindigkeit laufen.

Zusätzlich zum Antrieb der Seile kann auch ein Antrieb vorgesehen sein, der direkt auf die Folie 100 wirkt.

Die Folientransportvorrichtung erlaubt vorteilhafterweise ein Zusammenfahren der Schienen über die gesamte Ofenlänge und auch am Auslauf. Das geschieht durch eine Verschiebung aller Führungsschienen und der gesamten Umlenkung am Auslauf mit allen Antrieben.

Der Grad der Verstreckung der Folie 100 im Bereich II lässt sich in einfacher Weise veränderbar gestalten, indem die Seilumlenkung und die Antriebsräder fix eingebaut sind in der äußersten Position im Auslauf. Durch Positionieren eines kleinen Rollenelements 82 zur Umlenkung auf einer Schiene hinter dem letzten Öffhungsteil kann dieses mit dieser Schiene mitverschoben werden. Lediglich die jeweilige Seillänge muss am Rücklauf des Seiles ausgeglichen werden, was z.B. mittels weiterer Rollenelementen zur Umlenkung möglich ist.

Eine ähnliche Funktion wenn auch in wesentlich geringerem Ausmaß übernimmt das Rollenelement 81 am Einlauf, es gleicht die dort üblicherweise gemessenen leichten horizontalen Verschiebungen der Folie aus und reagiert zusammen mit der Einkaufeinheit und der entsprechenden Messeinrichtung.

Der Seilrücklauf kann innerhalb des Reckofens parallel mit dem Vorlauf erfolgen oder außerhalb des Reckofens auf gleicher Höhe oder über Umlenkwalzen über dem Reckofen oder auch im Boden davor und einer geraden Rücklaufschiene. Am Rücklauf können zusätzlich Vorrichtungen zum Spannen, Kühlen, Kontrollieren und Reinigen der Seile 10-1, 10-3 angeordnet sein.

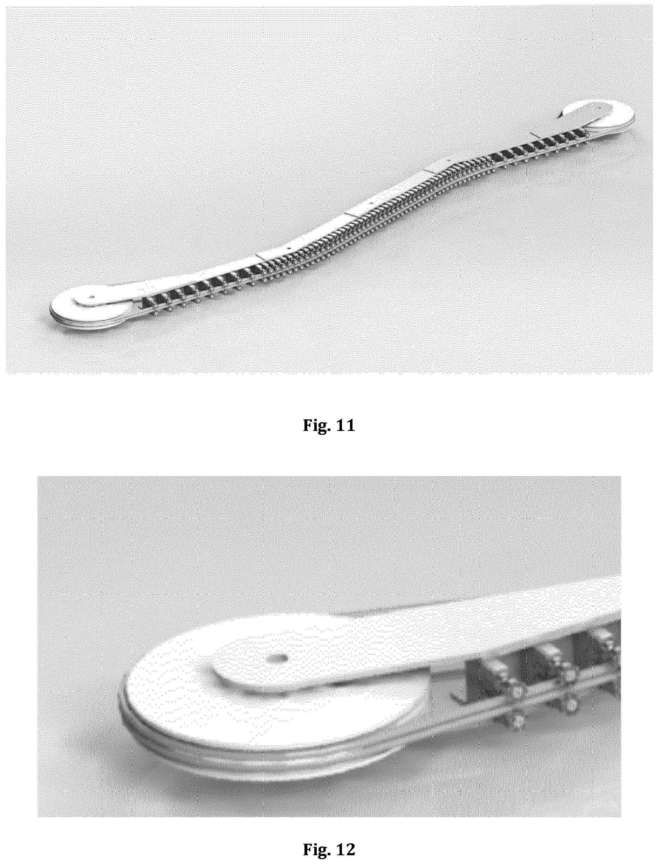

Fig. 11 illustriert die Bereiche I bis IV der Anlage, realisiert mit den erfindungsgemäßen Basisstrukturen. Gut zu erkennen sind dir größeren Abstände der Basisstrukturen zueinander in den geraden Bereichen I und IV sowie die geringeren Abstände im Reckbereich II und im Bereich III. Fig. 12 illustriert den Ein-/Auslauf an den Enden der Anlage.

Die gesamte Anordnung des Seilumlaufes kann über horizontal aber auch über vertikal angeordnete Antriebs- und Umlenkräder erfolgen.

## Patentansprüche

1. Basisstruktur (1) für eine Vorrichtung zum Transport von Folie (100), wobei die Basisstruktur (1) aufweist:
genau eine obere Führungseinheit (60) und genau eine untere Führungseinheit (50), wobei
die obere Führungseinheit (60) zum Führen eines oberen beweglichen Seiles (10-3) ausgestaltet ist und die untere Führungseinheit (50) zum Führen eines unteren beweglichen Seiles (10-1) ausgestaltet ist, wobei
das eine obere Seil (10-3) und das untere Seil (10-1) anordenbar sind, um die Folie (100) an deren Seitenrand zumindest stellenweise zu klemmen und mitzunehmen, und wobei
zumindest eine Führungseinheit (60) der Führungseinheiten (50, 60) ausgestaltet ist, die Folie (100) über das von der Führungseinheit (60) geführte Seil (10-3) gegen das von der anderen Führungseinheit (50) geführte Seil (10-1, 10-3) zu drücken,
wobei jede Führungseinheit (50, 60) jeweils genau ein Rollenelement (20, 30) aufweist, welches ausgestaltet ist, das jeweilige Seil (10-1, 10-3) zu führen,
**dadurch gekennzeichnet, dass** die Basisstruktur einen Stegabschnitt (12) aufweist, über welchen die Basisstruktur (1) mit einer zweiten ihr gleichartigen Basisstruktur (1) verbindbar ist.

2. Basisstruktur (1) gemäß Anspruch 1, wobei der Stegabschnitt (12) eine drehbare Verbindung (122) zu der zweiten Basisstruktur (1) vermittelt.

3. Basisstruktur (1) gemäß Anspruch 1, wobei der Stegabschnitt (12) eine fixe Verbindung (122) zu der zweiten Basisstruktur (1) vermittelt.

4. Basisstruktur (1) gemäß einem der vorherigen Ansprüche, weiter aufweisend: einen Halteabschnitt (13), der zum Halten der beiden Führungseinheiten dient und an dem der Stegabschnitt (12) angeordnet ist und mit dem der Stegabschnitt einer dritten ihr gleichartigen Basisstruktur (1) verbindbar ist.

5. Basisstruktur (1) gemäß Anspruch 4, wobei der Halteabschnitt (13) eine drehbare Verbindung zu der dritten Basisstruktur (1) vermittelt.

6. Basisstruktur (1) gemäß Anspruch 4, wobei der Halteabschnitt (13) eine fixe Verbindung zu der dritten Basisstruktur (1) vermittelt.

7. Basisstruktur (1) gemäß einem der vorherigen Ansprüche, weiter aufweisend: eine Dämpfungseinrichtung, die zwischen der Basisstruktur und der zweiten Basisstruktur angeordnet ist, zum Dämpfen von Schwingungseffekten der Basisstruktur und/oder der Seile.

8. Basisstruktur (1) gemäß einem der vorherigen Ansprüche, weiter aufweisend ein Druckelement, insbesondere ein pneumatisches Druckelement, welches vorgesehen ist, das eine Rollenelement gegen das andere Rollenelement zu drücken, wobei die Klemmung der Folie (100) durch die Rollenelemente (20, 30) und deren Druck auf die Seile bewirkt wird.

9. Basisstruktur (1) gemäß einem der vorherigen Ansprüche, wobei die Folie (100) zwischen das obere Seil (10-3) auf der oberen Folienfläche und das untere Seil (10-1) auf der unteren Folienfläche klemmbar ist.

10. Basisstruktur (1) gemäß einem der vorherigen Ansprüche, wobei das obere Seil (10-3) eine andere Schlagrichtung aufweist als das untere Seil (10-1).

11. Vorrichtung zum Transport von Folie (100) in einer Transportrichtung (MD), insbesondere für eine Reckanlage, aufweisend:
zwei Reihen von Basisstrukturen (1) gemäß einem der vorherigen Ansprüche, wobei die eine Reihe in Transportrichtung (MD) rechts angeordnet ist und die andere Reihe in Transportrichtung (MD) links angeordnet ist, wobei die zumindest zwei Reihen von Basisstrukturen (1) ausgestaltet sind, die jeweils von ihnen führbaren Seile mit gleicher Geschwindigkeit zu führen.

12. Vorrichtung gemäß Anspruch 11, wobei die rechts angeordnete Reihe und die links angeordnete Reihe jeweils eine erste Anzahl fix miteinander verbundener Basisstrukturen umfassen und eine zweite Anzahl drehbar miteinander verbundener Basisstrukturen umfassen.

13. Vorrichtung gemäß Anspruch 12, wobei die erste Anzahl von Basisstrukturen einen ersten Bereich (I) und einen dritten Bereich (III) bilden und die zweite Anzahl von Basisstrukturen einen zweiten Bereich (II) bilden, wobei der zweite Bereich (II) in Transportrichtung (MD) zwischen dem ersten Bereich (I) und dem dritten Bereich (III) angeordnet ist und wobei der erste Bereich (I) parallel zur Transportrichtung (MD) angeordnet ist und der dritte Bereich (III) in einem vorbestimmten Reckwinkel zu der Transportrichtung (MD) angeordnet ist und alle Basisstrukturen (1) des zweiten Bereiches (II) um einen gleichen Winkel gegenüber einer in Transportrichtung (MD) ihr benachbarten Basisstruktur (1) gedreht sind, wobei die Summe der Winkel den Reckwinkel ergibt.

14. Vorrichtung gemäß Anspruch 13, weiter aufweisend erste Folienheizeinrichtungen, die im ersten Bereich (I) in Transportrichtung (MD) zwischen einzelnen Basisstrukturen (1) angeordnet sind und auf die Folie (100) gerichtet sind.

15. Verfahren zum Transport von Folie (100) in einer Transportrichtung (MD), insbesondere für eine Reckanlage, wobei ein oberes sich bewegendes Seil (10-3) und ein unteres sich bewegendes Seil (10-1) geführt werden, wobei jedes Seil durch jeweils genau ein Rollenelement geführt wird und das eine obere geführte Seil und das zumindest eine untere geführte Seil die Folie (100) an deren Seitenrand zumindest stellenweise zwischen sich klemmen und mitnehmen, wobei Basisstrukturen gemäß einem der Ansprüche 1 bis 10 zur Verwendung kommen.

## Claims

1. Base structure (1) for a device for transporting film (100), the base structure (1) comprising:
exactly one upper guide unit (60) and exactly one lower guide unit (50), wherein
the upper guide unit (60) is adapted to guide an upper movable rope (10-3) and the lower guide unit (50) is adapted to guide a lower movable rope (10-1), wherein
the one upper rope (10-3) and the lower rope (10-1) are arrangeable to clamp and entrain the film (100) at its side edge at least in places, and wherein
at least one guide unit (60) of the guide units (50, 60) is adapted to press the film (100) via the cable (10-3) guided by the guide unit (60) against the cable (10-1, 10-3) guided by the other guide unit (50),
wherein each guide unit (50, 60) has exactly one roller element (20, 30), which is adapted to guide the respective rope (10-1, 10-3),
**characterized in that** the base structure has a web portion (12) via which the base structure (1) can be connected to a second base structure (1) of the same type.

2. Base structure (1) according to claim 1, wherein said web portion (12) provides a rotatable connection (122) to said second base structure (1).

3. Base structure (1) according to claim 1, wherein said web portion (12) provides a fixed connection (122) to said second base structure (1).

4. Base structure (1) according to any one of the preceding claims, further comprising: a holding portion (13) which serves for holding the two guide units and on which the web portion (12) is arranged and to which the web portion of a third base structure (1) similar thereto is connectable.

5. Base structure (1) according to claim 4, wherein the holding section (13) provides a rotatable connection to the third base structure (1).

6. Base structure (1) according to claim 4, wherein the holding section (13) provides a fixed connection to the third base structure (1).

7. Base structure (1) according to any one of the preceding claims, further comprising: damping means arranged between said base structure and said second base structure for damping vibration effects of said base structure and/or said ropes.

8. Base structure (1) according to any one of the preceding claims, further comprising a pressure element, in particular, a pneumatic pressure element, which is provided to press one pulley element against another pulley element, wherein the clamping of the film (100) is effected by the roller elements (20, 30) and their pressure on the ropes.

9. Base structure (1) according to any of the previous claims, wherein the film (100) is clampable between the upper rope (10-3) on the upper film surface and the lower rope (10-1) on the lower film surface.

10. Base structure (1) according to any one of the previous claims, wherein the upper rope (10-3) has a different direction of lay than the lower rope (10-1).

11. Device for transporting film (100) in a transport direction (MD), in particular, for a stretching plant, comprising:
two rows of base structures (1) according to any one of the preceding claims, one row being arranged on the right side in the transport direction (MD) and the other row being arranged on the left side in the transport direction (MD), the at least two rows of base structures (1) being adapted to guide the ropes which respectively are guided by them at the same speed.

12. Device according to claim 11, wherein the row on the right side and the row on the left side each comprise a first number of fixedly interconnected base structures and comprise a second number of rotatably interconnected base structures.

13. Device according to claim 12, wherein the first number of base structures form a first area (I) and a third area (III), and the second number of base structures form a second area (II), wherein the second area (II) is arranged in the transport direction (MD) between the first area (I) and the third area (III), and wherein the first area (I) is arranged parallel to the transport direction (MD) and the third region (III) is arranged at a predetermined stretch angle to the transport direction (MD) and all base structures (1) of the second area (II) are rotated by an equal angle with respect to a base structure (1) adjacent thereto in the transport direction (MD), the sum of the angles resulting in the stretch angle.

14. Device according to claim 13, further comprising first film heating means arranged in the first area (I) in the transport direction (MD) between individual base structures (1) and directed towards the film (100).

15. Method for transporting film (100) in a transport direction (MD), in particular, for a stretching plant, wherein an upper moving rope (10-3) and
a lower moving rope (10-1) are guided,
wherein each rope is guided by exactly one roller element each, and
the upper guided rope and the at least one lower guided rope clamp the film (100) at its side edge at least in places between them and carry it along, wherein base structures according to claims 1 to 10 are used.

## Revendications

1. Structure de base (1) pour dispositif permettant le transport d'une feuille (100), la structure de base (1) présentant :
exactement une unité de guidage supérieure (60) et exactement une unité de guidage inférieure (50), dans laquelle
l'unité de guidage supérieure (60) est conçue pour le guidage d'un câble (10-3) supérieur mobile et l'unité de guidage inférieure (50) est conçue pour le guidage d'un câble (10-1) inférieur mobile, dans laquelle
le câble (10-3) supérieur et le câble (10-1) inférieur peuvent être disposés de manière à serrer et à entraîner la feuille (100) sur son bord latéral, au moins par endroits, et
dans laquelle
au moins une unité de guidage (60) des unités de guidage (50, 60) est conçue pour presser la feuille (100) contre le câble (10-1, 10-3) guidé par l'autre unité de guidage (50) par l'intermédiaire du câble (10-3) guidé par l'unité de guidage (60),
dans laquelle chaque unité de guidage (50, 60) présente respectivement exactement un élément de rouleau (20, 30) conçu pour guider le câble (10-1, 10-3) respectif,
**caractérisée en ce que** la structure de base présente une section d'entretoise (12) par l'intermédiaire de laquelle la structure de base (1) peut être reliée à une deuxième structure de base (1) du même type.

2. Structure de base (1) selon la revendication 1, dans laquelle la section d'entretoise (12) fournit une liaison (122) rotative avec la deuxième structure de base (1).

3. Structure de base (1) selon la revendication 1, dans laquelle la section d'entretoise (12) fournit une liaison (122) fixe avec la deuxième structure de base (1).

4. Structure de base (1) selon l'une des revendications précédentes, présentant en outre : une section de maintien (13) servant à maintenir les deux unités de guidage et sur laquelle est disposée la section d'entretoise (12) et avec laquelle la section d'entretoise peut être reliée à une troisième structure de base (1) du même type.

5. Structure de base (1) selon la revendication 4, dans laquelle la section de maintien (13) fournit une liaison rotative avec la troisième structure de base (1).

6. Structure de base (1) selon la revendication 4, dans laquelle la section de maintien (13) fournit une liaison fixe avec la troisième structure de base (1).

7. Structure de base (1) selon l'une des revendications précédentes, présentant en outre : un appareil d'amortissement disposé entre la structure de base et la deuxième structure de base afin d'amortir les effets de vibration de la structure de base et/ou des câbles.

8. Structure de base (1) selon l'une des revendications précédentes, présentant en outre un élément de pression, en particulier un élément de pression pneumatique, prévu pour presser un élément de rouleau contre l'autre élément de rouleau, le serrage de la feuille (100) étant effectué par les éléments de rouleau (20, 30) et leur pression sur les câbles.

9. Structure de base (1) selon l'une des revendications précédentes, dans laquelle la feuille (100) peut être serrée entre le câble (10-3) supérieur sur la surface de feuille supérieure et le câble (10-1) inférieur sur la surface de feuille inférieure.

10. Structure de base (1) selon l'une des revendications précédentes, dans laquelle le câble (10-3) supérieur présente une direction de torsadage différente de celle du câble (10-1) inférieur.

11. Dispositif permettant le transport d'une feuille (100) dans une direction de transport (MD), en particulier pour un système d'étirage, présentant :
deux rangées de structures de base (1) selon l'une des revendications précédentes, une rangée étant disposée à droite dans la direction de transport (MD) et l'autre rangée étant disposée à gauche dans la direction de transport (MD), les au moins deux rangées de structures de base (1) étant conçues pour guider les câbles pouvant être respectivement guidés par celles-ci à la même vitesse.

12. Dispositif selon la revendication 11, dans lequel la rangée disposée à droite et la rangée disposée à gauche comprennent respectivement un premier nombre de structures de base reliées les unes aux autres de manière fixe et un second nombre de structures de base reliées les unes aux autres de manière rotative.

13. Dispositif selon la revendication 12, dans lequel le premier nombre de structures de base forme une première zone (I) et une troisième zone (III) et le second nombre de structures de base forme une deuxième zone (II), la deuxième zone (II) étant disposée entre la première zone (I) et la troisième zone (III) dans la direction de transport (MD) et la première zone (I) étant disposée parallèlement à la direction de transport (MD) et la troisième zone (III) étant disposée à un angle d'étirement prédéterminé par rapport à la direction de transport (MD) et toutes les structures de base (1) de la deuxième zone (II) étant pivotées à un même angle par rapport à une structure de base (1) adjacente à celles-ci dans la direction de transport (MD), la somme des angles donnant l'angle d'étirement.

14. Dispositif selon la revendication 13, présentant en outre des premiers dispositifs de chauffage de feuille disposés entre des structures de base (1) individuelles dans la première zone (I) dans la direction de transport (MD) et dirigés vers la feuille (100).

15. Procédé permettant le transport d'une feuille (100) dans une direction de transport (MD), en particulier pour un système d'étirage, dans lequel un câble (10-3) supérieur mobile et un câble (10-1) inférieur mobile sont guidés, chaque câble étant guidé par respectivement exactement un élément de rouleau et le câble supérieur guidé et l'au moins un câble inférieur guidé serrant la feuille (100) entre eux et l'entraînant sur son bord latéral, au moins par endroits, des structures de base selon l'une des revendications 1 à 10 étant utilisées.
